# EUROPÄISCHE PATENTSCHRIFT

(11) **EP 1 895 324 B1**
(45) Veröffentlichungstag und Bekanntmachung des Hinweises auf die Patenterteilung: **14.10.2009**
(21) Anmeldenummer: 06119721.6
(22) Anmeldetag: 29.08.2006
(51) Int. Cl.: G01T 1/29

(54) **Verfahren und Vorrichtung zum Auslesen von in einer Speicherleuchtstoffplatte gespeicherten Röntgeninformationen**
Device and method for reading out x-ray information stored in a luminescent material storage plate
Procédé et dispositif destinés à l'extraction d'informations radiographiques stockées sur un disque fluorescent de mémoire

(43) Veröffentlichungstag der Anmeldung: 05.03.2008
(73) Patentinhaber: Agfa HealthCare NV, 2640 Mortsel (BE)
(72) Erfinder: Scherer, Horst, D-82008 Unterhaching (DE); Mair, Stephan, D-82362 Weilheim (DE); Hartmann, Thomas, D-82449 Uffing a. Staffelsee (DE); Romanski, Heinz-Josef c/o RSV Romanski, D-36199 Rotenburg a.d. Fulda (DE)
(74) Vertreter: Linsmeier, Josef

(56) Entgegenhaltungen:
- DE-A1- 4 033 084
- JP-A- 2 071 662
- US-A1- 2006 054 845

## Beschreibung

Die Erfindung betrifft ein Verfahren sowie eine entsprechende Vorrichtung zum Auslesen von in einer Speicherleuchtstoffplatte gespeicherten Röntgeninformationen gemäß dem Oberbegriff des Anspruchs 1 bzw. 13.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z.B. einem Monitor oder Drucker, ausgegeben werden.

Aus US 2006/0054845 A1 und JP 1990-071662 A sind Verfahren und Vorrichtungen bekannt, bei welchen das von einer Referenzlichtquelle emittierte Licht von einem Photomultiplier erfasst und in ein entsprechendes Referenzsignal umgewandelt wird, das mit einem Sollwert verglichen wird, welcher einer vorab festgelegten Intensität des von der Referenzlichtquelle emittierten Lichts entspricht.

Abhängig vom Ergebnis dieses Vergleichs wird die am Photomultiplier anliegende Hochspannung verändert, um etwaige Empfindlichkeitsverluste des Photomultipliers zu korrigieren. Empfindlichkeitsschwankungen können hierbei nicht immer zuverlässig erkannt und ggf. korrigiert werden. Dies gilt insbesondere für bestimmte Typen von Photomultipliern und anderen Detektoren, wie z.B. CCD- oder Photodiodenzeilen.

Aus DE 40 33 084 A1 ist bekannt, zwischen sog. Bildpunkteintastungen, bei welchen das längs einer Abtastzeile einer Bildplatte durch stimulierende Strahlung angeregte Licht emittiert und von einem optoelektronischen Wandler erfasst wird, mehrere sog. Bildpunktaustastungen vorzunehmen, bei welchen jeweils ein Dunkelsignal erfasst wird, während die Bildplatte nicht mit stimulierender Strahlung angeregt wird. Der jeweilige Dunkelsignalpegel wird bis zur nächsten Bildpunktaustastung fixiert und solange zur Nullpunktkorrektur der bei den nachfolgenden Bildpunkteintastungen erhaltenen Messpunkte herangezogen. Bei diesem Verfahren können Einflüsse von Nachleuchten und Flare der Bildplatte aber auch von Dunkelströmen und einer Drift des Nullpunktes des optoelektronischen Wandlers korrigiert werden. Eine Überprüfung und ggf. Korrektur einer veränderlichen Empfindlichkeit des Wandlers ist mit diesem Verfahren dagegen nicht möglich.

Es ist Aufgabe der Erfindung, ein Verfahren sowie eine entsprechende Vorrichtung anzugeben, welches bzw. welche eine möglichst zuverlässige Überprüfung von Empfindlichkeitsschwankungen, insbesondere bei unterschiedlichen Typen von Detektoren, ermöglicht.

Diese Aufgabe wird durch das Verfahren bzw. die Vorrichtung gemäß Anspruch 1 bzw. 13 gelöst.

Die Erfindung basiert auf dem Gedanken, dass mit dem Detektor während mehrerer Referenzmesszeiten Referenzmessungen durchgeführt und dabei mehrere entsprechende Referenzsignale erzeugt werden, welche zur Überprüfung der Empfindlichkeit des Detektors für Emissionslicht herangezogen werden. Mit dem Detektor wird während der Referenzmesszeiten das von einer Referenzlichtquelle ausgesandte Referenzlicht erfasst und in die Referenzsignale umgewandelt. Die einzelnen Referenzmesszeiten, in denen die Referenzmessungen durchgeführt werden, liegen hierbei zwischen den Messzeiten, in denen das von der Speicherleuchtstoffplatte ausgesandte Emissionslicht vom Detektor erfasst wird. Auf diese Weise wird während des Auslesens einer Speicherleuchtstoffplatte eine fortlaufende Überprüfung der Empfindlichkeit des Detektors in unmittelbarer zeitlicher Nähe zu den jeweiligen Messzeiten, in denen der Detektor das Emissionslicht erfasst, erreicht, wodurch eine hohe Zuverlässigkeit bei der Überprüfung von möglichen Empfindlichkeitsschwankungen des Detektors gewährleistet wird. Da hierbei selbst in kurzen Zeitabständen auftretende Empfindlichkeitsschwankungen erkannt werden können, ist die Erfindung bei unterschiedlichsten Typen von Detektoren einsetzbar, welche z.B. eine vorab nicht genau bekannte und/oder eine sehr große Empfindlichkeitsdrift aufweisen. Darüber hinaus können durch die Erfindung auch zeitliche Veränderungen in der dem Detektor nachgeschalteten Elektronik, in welcher z.B. eine Signalumwandlung oder-verarbeitung erfolgt, erfasst und überprüft werden.

In einer bevorzugten Ausgestaltung der Erfindung ist vorgesehen, dass aus den Referenzsignalen mindestens ein Referenzwert abgeleitet wird, welcher zur Überprüfung der Empfindlichkeit des Detektors für Emissionslicht herangezogen wird. Vorzugsweise erfolgt die Ableitung des Referenzwertes durch eine Mittelung einer bestimmten Anzahl von Referenzsignalen, insbesondere von 5 bis 25 Referenzsignalen. Auf diese Weise wird eine besonders zuverlässige Überprüfung etwaiger Empfindlichkeitsschwankungen des Detektors erreicht.

Es ist außerdem bevorzugt, dass zur Überprüfung der Empfindlichkeit des Detektors die Referenzsignale bzw. der aus den Referenzsignalen abgeleitete Referenzwert mit einem Referenz-Sollwert verglichen werden bzw. wird. Daraufhin kann die Empfindlichkeit des Detektors verändert werden, wenn die Referenzsignale bzw. der aus den Referenzsignalen abgeleitete Referenzwert von dem Referenz-Sollwert abweichen bzw. abweicht. Hierdurch kann die Empfindlichkeit des Detektors während des Auslesens einer Speicherleuchtstoffplatte überprüft und ggf. auf eine bei der jeweiligen Anwendung erforderliche Soll-Empfindlichkeit korrigiert werden.

Alternativ oder zusätzlich zur oben beschriebenen Ausgestaltung können die während der Messzeiten vom Detektor erzeugten Emissionslichtsignale korrigiert werden, wenn die Referenzsignale bzw. der aus den Referenzsignalen abgeleitete Referenzwert von dem Referenz-Sollwert abweichen bzw. abweicht. Hierdurch wird eine erforderliche Korrektur stark vereinfacht, da diese nicht durch Veränderung der Empfindlichkeit, beispielsweise durch Variation der Hochspannung eines Photomultipliers, während des Auslesens der Speicherleuchtstoffplatte korrigiert zu werden braucht, sondern erst nach dem Ende des vollständigen Auslesevorgangs durch eine einfache Signalverarbeitung der Emissionslichtsignale erfolgen kann.

Die Referenzlichtquelle sendet vorzugsweise nur während der Referenzmesszeiten, welche zwischen den Messzeiten liegen, das Referenzlicht aus. Hierdurch wird gewährleistet, dass das Referenzlicht ausschließlich zwischen den Messzeiten ausgesandt wird und hierbei die Erfassung des Emissionslichts durch den Detektor während der Messzeiten nicht stören kann.

In einer weiteren Ausgestaltung der Erfindung ist vorgesehen, dass das von der Referenzlichtquelle ausgesandte Referenzlicht eine Intensität aufweist, die in unterschiedlichen Referenzmesszeiten unterschiedlich groß ist. Hierdurch erfasst der Detektor während mehrerer Referenzmesszeiten unterschiedlich große Intensitäten des Referenzlichts und wandelt diese in entsprechend unterschiedliche Referenzsignale um, welche Informationen über die Abhängigkeit der Empfindlichkeit des Detektors von der jeweiligen Intensität des Lichts, das vom Detektor erfasst wird, enthält und dadurch Aufschlüsse über eine etwaige Nichtlinearität der Detektorempfindlichkeit zulässt. Auf der Grundlage dieser Informationen können die vom Detektor erzeugten Emissionslichtsignale korrigiert werden, wodurch die Zuverlässigkeit bei der Wiedergabe und Darstellung der aus der Speicherleuchtstoffplatte ausgelesenen Röntgeninformationen erhöht wird.

In einem Beispiel ist vorgesehen, dass der Detektor ein Halbleiterdetektor ist, der während der Referenzmesszeiten in einem Referenzmodus betrieben wird, in welchem die Referenzsignale erzeugt werden, indem eine Referenzspannung an den Detektor angelegt wird. Durch das Anlegen einer Referenzspannung, insbesondere einer so genannten Bias-Spannung, wird der Halbleiterdetektor in einen Zustand gebracht, der dem Zustand während des Erfassens von Licht, beispielsweise aus einer Referenzlichtquelle, entspricht. Hierdurch kann bei Referenzmessungen auf eine separate Referenzlichtquelle verzichtet werden.

In einer weiteren Ausgestaltung der Erfindung ist vorgesehen, dass der Detektor während mehrerer Offsetmesszeiten, die jeweils zwischen Messzeiten liegen und in denen keine Bestrahlung der Speicherleuchtstoffplatte mit Stimulationslicht und damit keine Aussendung von Emissionslicht erfolgt und auch die Referenzlichtquelle kein Referenzlicht aussendet, mehrere Offsetsignale erzeugt, aus welchen mindestens ein Offsetwert abgeleitet wird, der ein Maß für einen Untergrund darstellt, welcher insbesondere von Umgebungslicht und/oder Dunkelströmen des Detektors verursacht wird und zur Korrektur der Emissionslichtsignale herangezogen wird. Hierdurch wird auf zuverlässige Weise der Einfluss von Umgebungslicht bzw. Dunkelströmen des Detektors auf die Emissionslichtsignale eliminiert oder zumindest reduziert und dabei die Zuverlässigkeit bei der Wiedergabe der ausgelesenen Röntgeninformation erhöht.

Dabei ist bevorzugt, dass die zwischen den Messzeiten liegenden einzelnen Referenz- und Offsetmesszeiten abwechselnd aufeinander folgen und durch jeweils mindestens eine Messzeit voneinander getrennt sind. Hierdurch wird zeitnah zur jeweiligen Erfassung des Emissionslichts während einer Messzeit eine Überprüfung der Detektorempfindlichkeit einerseits sowie die Korrektur der Emissionslichtsignale andererseits erreicht.

Hierbei ist bevorzugt, dass die Summe aus einer Messzeit und einer darauf folgenden Referenz- bzw. Offsetzeit eine Zyklusdauer ergibt und die Messzeit zwischen 60 und 80 % der Zyklusdauer und die Referenz- bzw. Offsetzeit dementsprechend zwischen 40 und 20 % der Zykluszeitdauer beträgt. Dadurch wird erreicht, dass einerseits die Messzeit für die Erfassung des Emissionslichts ausreichend groß ist, so dass möglichst viel Emissionslicht erfasst werden kann, gleichzeitig aber die Referenz- bzw. Offsetzeit nicht zu klein ist, um noch eine ausreichend hohe Genauigkeit bei der Überprüfung bzw. Korrektur der Detektorempfindlichkeit bzw. des Untergrunds zu gewährleisten.

Die Erfindung wird nachfolgend anhand von Figuren näher erläutert. Es zeigen:
- Fig. 1: ein erstes Ausführungsbeispiel der Erfindung;
- Fig. 2: Diagramme zur Veranschaulichung der zeitlichen Abfolge der einzelnen Schritte des erfindungsgemäßen Verfahrens;
- Fig. 3: ein zweites Ausführungsbeispiel der Erfindung; und
- Fig. 4: einen schematischen Aufbau eines im zweiten Ausführungsbeispiel eingesetzten Halbleiterdetektors.

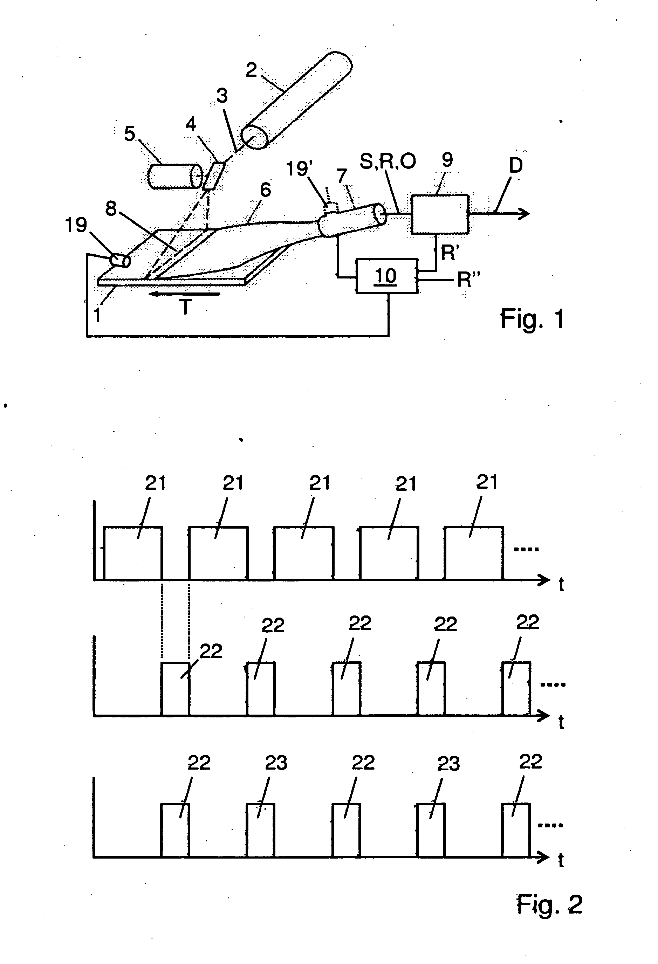

Fig. 1 zeigt ein erstes Ausführungsbeispiel der erfindungsgemäßen Vorrichtung zum Auslesen einer Speicherleuchtstoffplatte 1. Ein Laser 2 erzeugt einen Stimulationslichtstrahl 3, der durch ein von einem Antrieb, insbesondere einem Motor 5 oder einem Galvanometer, in Rotation bzw. Bewegung versetztes Ablenkelement 4 derart abgelenkt wird, dass dieser entlang einer Zeile 8 über die auszulesende Speicherleuchtstoffplatte 1 bewegt wird. Das Ablenkelement 4 ist vorzugsweise ein Spiegel, insbesondere ein Polygonspiegel oder Galvanometer-Spiegel.

Während der Bewegung des Stimulationslichtstrahls 3 entlang der Zeile 8 sendet die Speicherleuchtstoffplatte 1 in Abhängigkeit der darin gespeicherten Röntgeninformationen Emissionslicht aus, welches von einer optischen Sammeleinrichtung 6, beispielsweise einem Lichtleiterbündel, gesammelt, weitergeleitet und von einem mit der Sammeleinrichtung 6 gekoppelten optischen Detektor 7, vorzugsweise einem Photomultiplier, erfasst und in entsprechende analoge Emissionslichtsignale S umgewandelt wird. Die Emissionslichtsignale S werden einer Verarbeitungseinrichtung 9 zugeführt, in welcher aus den analogen Emissionslichtsignalen S digitale Emissionslichtsignale D abgeleitet werden.

Durch einen Transport der Speicherleuchtstoffplatte 1 in Transportrichtung T wird die Speicherleuchtstoffplatte 1 sukzessive entlang einzelner Zeilen 8 ausgelesen, wobei ein zweidimensionales Bild erhalten wird, welches sich aus einzelnen Bildpunkten zusammensetzt, denen jeweils ein Signalwert der digitalen Emissionslichtsignale D zugeordnet ist.

Im Bereich des Eingangs der Sammeleinrichtung 6 ist eine Referenzlichtquelle 19 angeordnet, welche Referenzlicht emittiert. Der Wellenlängenbereich des Referenzlichts ist vorzugsweise ähnlich oder identisch mit dem Wellenlängenbereich des Emissionslichts. Insbesondere wird als Referenzlichtquelle 19 eine Leuchtdiode (LED) verwendet, die blaues Licht emittiert. Das Referenzlicht wird von der optischen Sammeleinrichtung 6 gesammelt, zum Detektor 7 weitergeleitet, von diesem erfasst und in entsprechende Referenzsignale R umgewandelt.

Alternativ kann die Referenzlichtquelle 19 an einer anderen Stelle angeordnet sein. Sie kann z.B. in der Sammeleinrichtung 6 integriert oder unmittelbar vor dem Eingangsbereich des Detektors 7 angebracht sein (jeweils nicht dargestellt). Sie kann auch z.B. direkt am Detektor 7 angebracht und/oder in den Detektor 7 integriert sein, wie durch die gestrichelt gezeichnete Referenzlichtquelle 19' angedeutet.

Der Detektor 7, die Referenzlichtquelle 19 und die Verarbeitungseinrichtung 9 sind mit einer Steuerungseinrichtung 10 verbunden, durch welche der Detektor 7, die Referenzlichtquelle 19 bzw. die Verarbeitungseinrichtung 9 in erfindungsgemäßer Weise gesteuert werden.

Fig. 2 zeigt Diagramme zur Veranschaulichung der Abfolge der einzelnen Schritte des erfindungsgemäßen Verfahrens in Abhängigkeit von der Zeit t. Durch die Steuerungseinrichtung 10 wird der Detektor 7 derart angesteuert, dass dieser während jeweils einer Messzeit 21 (siehe oberes Diagramm) das von einer Zeile 8 der Speicherleuchtstoffplatte ausgehende Emissionslicht erfasst und in ein entsprechendes Emissionslichtsignal S umwandelt. Die Referenzlichtquelle 19 wird vorzugsweise so gesteuert, dass sie während der Messzeiten 21 kein Referenzlicht aussendet. In einer auf diese Messzeit folgenden Messzeit 21 wird dann das von einer weiteren Zeile 8 ausgehende Emissionslicht erfasst und ein entsprechendes Emissionslichtsignal S erzeugt usw. Insgesamt wird hierdurch die Speicherleuchtstoffplatte 1 während einer Vielzahl von Messzeiten 21 zeilenweise ausgelesen, wobei eine Vielzahl von entsprechenden Emissionslichtsignalen S erzeugt werden.

Erfindungsgemäß liegen zwischen den einzelnen Messzeiten 21 - d.h. nach dem Ende einer Messzeit 21 und vor dem Beginn einer darauf folgenden Messzeit 21 - einzelne Referenzmesszeiten 22 (siehe mittleres Diagramm). Während dieser Referenzmesszeiten 22 werden die Referenzlichtquelle 19 und der Detektor 7 durch die Steuerungseinrichtung 10 so gesteuert, dass die Referenzlichtquelle 19 Referenzlicht aussendet, welches vom Detektor 7 erfasst und in entsprechende Referenzsignale R umgewandelt wird.

Die während mehrerer Referenzmesszeiten 22 erzeugten Referenzsignale R werden in der Verarbeitungseinrichtung 9 einer Mittelung unterzogen, wobei ein Referenzwert R' erhalten wird, der in der Steuerungseinrichtung 10 mit einem vorgegebenen Referenzsollwert R" verglichen wird.

Für den Fall, dass der Referenzwert R' von dem Referenzsollwert R" abweicht, wird durch die Steuerungseinrichtung 10 die Empfindlichkeit des Detektors 7 verändert. Im dargestellten Beispiel, in welchem der Detektor 7 als Photomultiplier ausgebildet ist, wird dazu die am Photomultiplier anliegende Hochspannung entsprechend verändert.

Ergibt beispielsweise der Vergleich, dass der Referenzwert R' kleiner ist als der Referenzsollwert R", so deutet dies auf eine verminderte Empfindlichkeit des Detektors 7 hin, welche durch eine Erhöhung der am Photomultiplier anliegenden Hochspannung kompensiert wird. Ist der Referenzwert R' dagegen größer als der Referenzsollwert R", so wird die am Photomultiplier anliegende Hochspannung vermindert.

Durch die fortlaufende Durchführung von Referenzmessungen in Referenzmesszeiten 22, welche zwischen den eigentlichen Messzeiten 21 für das Emissionslicht liegen, und die sukzessive Überprüfung und ggf. Korrektur der Empfindlichkeit des Detektors 7 wird eine hohe Zuverlässigkeit bei der Überprüfung und Korrektur von etwaigen Empfindlichkeitsschwankungen des Detektors 7 während des Auslesens einer Speicherleuchtstoffplatte 1 erreicht.

In einer besonders vorteilhaften Variante des erfindungsgemäßen Verfahrens wird die in diesem Ausführungsbeispiel dargestellte Vorrichtung derart gesteuert, dass zwischen den Messzeiten 21 abwechselnd Referenzmessungen während der Referenzmesszeiten 22 und Offsetmessungen während Offsetmesszeiten 23 durchgeführt werden, wie im unteren Diagramm der Fig. 2 dargestellt.

Während der Offsetmesszeiten 23 ist sowohl die Referenzlichtquelle 19 als auch der Laser 2 ausgeschaltet, so dass der Detektor 7 lediglich Umgebungslicht und/oder Dunkelströme des Detektors 7 selbst erfassen kann und in entsprechende Offsetsignale O umwandelt. Aus mehreren, typischerweise 5 bis 25, Offsetsignalen O wird in der Verarbeitungseinrichtung 9 durch Mittelung ein Offsetwert abgeleitet, welcher ein Maß für den Untergrund (Offset) darstellt und zur Korrektur der einzelnen Emissionslichtsignale S bzw. D herangezogen wird, indem dieser von den Emissionslichtsignalen S bzw. D abgezogen wird.

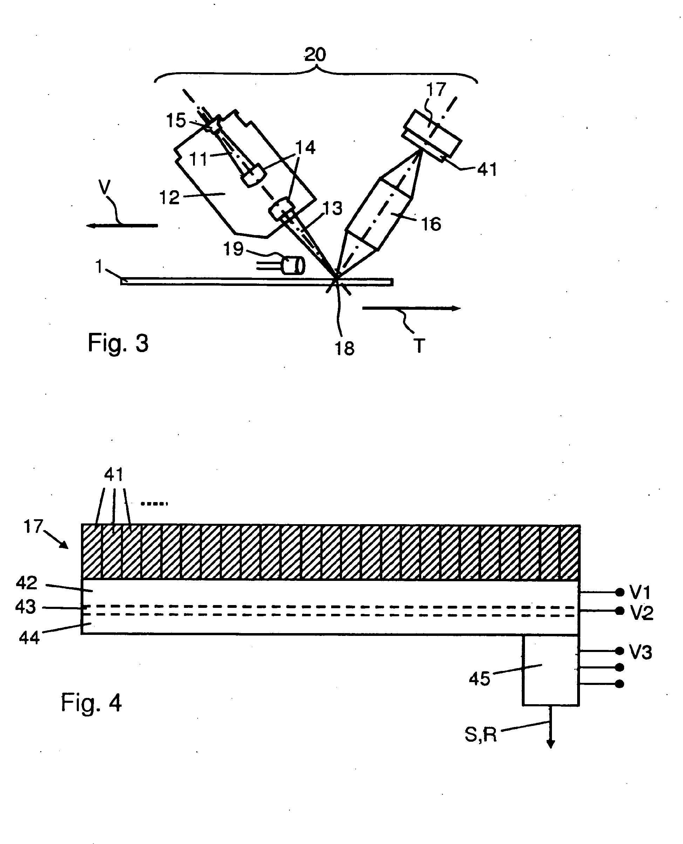

Fig. 3 zeigt ein zweites Ausführungsbeispiel der Vorrichtung zur Durchführung des erfindungsgemäßen Verfahrens. Die Speicherleuchtstoffplatte 1 wird mit Stimulationslicht 13 bestrahlt, welches von einer zeilenförmigen Lichtquelle 12 erzeugt wird.

Die Lichtquelle 12 umfasst mehrere, senkrecht zur Figurenebene in einer Zeile angeordnete Strahlungsquellen 15, wie z.B. Leuchtdioden oder Laserdioden, sowie eine aus zwei länglichen Zylinderlinsen zusammengesetzte Fokussiereinrichtung 14, welche die von den Strahlungsquellen 15 ausgehenden divergenten Stimulationslichtbündel 11 auf die Speicherleuchtstoffplatte 1 fokussiert. Senkrecht zur Figurenebene überlagern sich die divergenten Stimulationslichtbündel 11 der einzelnen Strahlungsquellen 15 in der Weise, dass das Stimulationslicht 13 in einer senkrecht zur Figurenebene verlaufenden, kontinuierlichen Stimulationslichtlinie 18 auf die Speicherleuchtstoffplatte 1 trifft.

Das im Bereich der Stimulationslichtlinie 18 in der Speicherleuchtstoffplatte 1 angeregte und abgestrahlte Emissionslicht wird mittels einer Abbildungseinrichtung 16, z.B. in Form eines SELFOC-, Gradientenindex- oder Mikrolinsenarrays, auf einen zeilenförmigen Halbleiterdetektor 17 abgebildet und von diesem ortsaufgelöst erfasst. Dazu weist der Halbleiterdetektor 17 eine Vielzahl von lichtempfindlichen Detektorelementen 41 auf, welche entlang einer senkrecht zur Figurenebene verlaufenden Zeile angeordnet sind. Der Halbleiterdetektor 17 ist vorzugsweise als CCD- oder Photodiodenzeile ausgebildet.

Die Lichtquelle 12, der Halbleiterdetektor 17 und die Abbildungseinrichtung 16 bilden zusammen einen Scanner 20, welcher während des Auslesens in Vorschubrichtung V relativ zur Speicherleuchtstoffplatte 1 bewegt wird. Alternativ oder zusätzlich kann die Speicherleuchtstoffplatte 1 in Transportrichtung T transportiert werden. Auf diese Weise wird die Speicherleuchtstoffplatte 1 analog zu dem in Fig. 1 beschriebenen Ausführungsbeispiel zeilenweise ausgelesen, wobei schließlich ein zweidimensionales Bild erhalten wird.

Im hier dargestellten Beispiel ist im Bereich des Eingangs der Abbildungseinrichtung 16 eine Referenzlichtquelle 19 angeordnet. Der Halbleiterdetektor 17 und die Referenzlichtquelle 19 werden durch eine Steuerungseinrichtung (nicht dargestellt) analog zu dem im Zusammenhang mit den Figuren 1 und 2 beschriebenen Verfahren gesteuert. Herbei wird jeweils während einer Messzeit 21 eine ganze Zeile der Speicherleuchtstoffplatte 1 entlang der Stimulationslichtlinie 18 ausgelesen und das hierbei erfasste Emissionslicht in ein Emissionslichtsignal umgewandelt. Während der Relativbewegung von Scanner 20 und Speicherleuchtstoffplatte 1 wird diese sukzessive während einer Vielzahl von Messzeiten 21 zeilenweise ausgelesen.

Zwischen den Messzeiten 21, d.h. zwischen dem Auslesen einzelner Zeilen, werden während einer Vielzahl von Referenzmesszeiten 22 Referenzmessungen durchgeführt, wobei die Referenzlichtquelle 19 Referenzlicht aussendet, welches durch die Abbildungseinrichtung 16 auf die lichtempfindlichen Detektorelemente 41 des Halbleiterdetektors 17 abgebildet, von diesem erfasst und in entsprechende Referenzsignale umgewandelt wird. Im Übrigen gelten für dieses Beispiel die Erläuterungen zu den Figuren 1 und 2 entsprechend.

In einem Beispiel wird auf die Referenzlichtquelle 19 verzichtet. Der Halbleiterdetektor 17 wird hierbei während der Referenzmesszeiten 22 in einem Referenzmodus betrieben, in dem an den Halbleiterdetektor 7 eine Referenzspannung, insbesondere eine sog. Bias-Spannung, angelegt wird, durch die Referenzsignale erzeugt werden, ohne dass Licht, wie z.B. Referenzlicht, auf den Halbleiterdetektor 17 trifft. Die auf diese Weise erhaltenen Referenzsignale sind den bei der oben beschriebenen Referenzmessung mit Referenzlicht erhaltenen Referenzsignalen ähnlich und können zur Überprüfung der Veränderung der Empfindlichkeit des Halbleiterdetektors 17 und ggf. zur Korrektur der Empfindlichkeit herangezogen werden.

Fig. 4 zeigt einen schematischen Aufbau des Halbleiterdetektors 17, welcher eine Vielzahl, typischerweise zwischen 1000 und 10000, lichtempfindlicher Detektorelemente 41 mit typischen Abmessungen von etwa 50 x 400 µm je Detektorelement 41 aufweist. Der Halbleiterdetektor 17 weist außerdem einen Speicherbereich 42 auf, in welchem die durch die Detektorelemente 41 bei der Erfassung von Licht erzeugten Ladungen gespeichert werden.

Der Speicherbereich 42 ist über ein sog. Transfer Gate 43 mit einem Schieberegister 44 verbunden, in welches die im Speicherbereich 42 gespeicherten Ladungen übertragen und nacheinander einer elektronischen Schaltung 45 zugeführt werden. In der elektronischen Schaltung 45 werden aus den Ladungen entsprechende Emissionslichtsignale S abgeleitet.

An den Speicherbereich 42 und/oder an das Transfer Gate 43 wird während der Referenzmesszeiten 22 (siehe Fig. 2) eine Speicher Gate Bias-Spannung V1 oder eine Antiblooming Bias-Spannung bzw. eine Transfer Gate Bias-Spannung V2 angelegt, wodurch Referenzsignale R erzeugt werden, ohne dass der Halbleiterdetektor 17 Licht, wie z.B. Referenzlicht, erfasst. Alternativ oder zusätzlich können andere bzw. weitere Bias-Spannungen an die dem Halbleiterdetektor 17 nachgeschaltete elektronische Schaltung 45 angelegt werden, wie z.B. eine Output Gate Bias-Spannung V3. Auf diese Weise kann bei der Erzeugung von Referenzsignalen R auf die Referenzlichtquelle 19 verzichtet werden.

Die bei diesem Beispiel gewonnenen Referenzsignale R oder ein daraus abgeleiteter Referenzwert werden zur Überprüfung und ggf. Korrektur von Empfindlichkeitsschwankungen des Halbleiterdetektors 17 für Emissionslicht herangezogen. Die Referenzsignale R bzw. der Referenzwert werden bzw. wird hierbei mit einem Referenzsollwert verglichen. Im Falle einer Abweichung vom Referenzsollwert nach oben oder unten wird die Empfindlichkeit des Halbleiterdetektors 17 entsprechend verringert bzw. erhöht.

Im Übrigen gelten für dieses Beispiel die Erläuterungen zu den Figuren 1 und 2 entsprechend.

In allen oben beschriebenen Beispielen wir die Empfindlichkeit des Detektors 7 bzw. 17 während des Auslesens einer Speicherleuchtstoffplatte 1 sukzessive überprüft und ggf. korrigiert. Alternativ oder zusätzlich kann vorgesehen sein, die Emissionslichtsignale S bzw. D zu korrigieren, wenn die Referenzsignale R bzw. der aus den Referenzsignalen R abgeleitete Referenzwert R' von dem Referenzsollwert R" abweichen bzw. abweicht. Hierbei kann z.B. vorgesehen sein, die Referenzsignale R bzw. den aus den Referenzsignalen R abgeleiteten Referenzwert R' zu speichern und eine Überprüfung und ggf. Korrektur der ebenfalls gespeicherten digitalen Emissionslichtsignale D erst nach dem vollständigen Auslesen der Speicherleuchtstoffplatte 1 durchzuführen.

## Patentansprüche

1. Verfahren zum Auslesen von in einer Speicherieuchtstoffplatte (1) gespeicherten Röntgeninformationen, wobei die Speicherleuchtstoffplatte (1) mit Stimulationslicht (3, 13) bestrahlt und dabei zur Aussendung von Emissionslicht angeregt wird, welches von einem Detektor (7, 17) während mehrerer Messzeiten (21) erfasst und in entsprechende Emissionslichtsignale (S, D) umgewandelt wird, **dadurch gekennzeichnet, dass** mit dem Detektor (7, 17) während mehrerer Referenzmesszeiten (22) Referenzmessungen durchgeführt werden, indem mit dem Detektor (7, 17) während der Referenzmesszeiten (22) das von einer Referenzlichtquelle (19, 19') ausgesandte Referenzlicht erfasst und in mehrere Referenzsignale (R) umgewandelt wird, wobei die einzelnen Referenzmesszeiten (22) jeweils zwischen den Messzeiten (21) liegen und die Referenzsignale (R) zur Überprüfung der Empfindlichkeit des Detektors (7, 17) für Emissionslicht herangezogen werden.

2. Verfahren nach Anspruch 1, wobei aus den Referenzsignalen (R) mindestens ein Referenzwert (R') abgeleitet wird, welcher zur Überprüfung der Empfindlichkeit des Detektors (7, 17) für Emissionslicht herangezogen wird.

3. Verfahren nach Anspruch 2, wobei der Referenzwert (R') aus den Referenzsignalen (R) durch Mittelung der Referenzsignale (R) abgeleitet wird.

4. Verfahren nach einem der vorangehenden Ansprüche, wobei zur Überprüfung der Empfindlichkeit des Detektors (7, 17) die Referenzsignale (R) bzw. der aus den Referenzsignalen (R) abgeleitete Referenzwert (R') mit einem Referenzsollwert (R") verglichen werden bzw. wird.

5. Verfahren nach Anspruch 4, wobei die Empfindlichkeit des Detektors (7, 17) verändert wird, wenn die Referenzsignale (R) bzw. der aus den Referenzsignalen (R) abgeleitete Referenzwert (R') von dem Referenzsollwert (R") abweichen bzw. abweicht.

6. Verfahren nach Anspruch 4, wobei die Emissionslichtsignale (S, D) korrigiert werden, wenn die Referenzsignale (R) bzw. der aus den Referenzsignalen (R) abgeleitete Referenzwert (R') von dem Referenzsollwert (R") abweichen bzw. abweicht.

7. Verfahren nach einem der vorangehenden Ansprüche, wobei die Referenzlichtquelle (19, 19') während der Referenzmesszeiten (22) das Referenzlicht aussendet und während der Messzeiten (21) kein Referenzlicht aussendet.

8. Verfahren nach einem der vorangehenden Ansprüche, wobei das von der Referenzlichtquelle (19, 19') ausgesandte Referenzlicht eine Intensität aufweist, die in unterschiedlichen Referenzmesszeiten (22) unterschiedlich ist.

9. Verfahren nach einem der Ansprüche 1 bis 8, wobei der Detektor (7, 17) ein Photomultplier (7) ist, an dem eine Hochspannung anliegt, durch welche die Empfindlichkeit des Detektors (7) eingestellt wird.

10. Verfahren nach einem der vorangehenden Ansprüche, wobei der Detektor (7, 17) während mehrerer Offsetmesszeiten (23), welche jeweils zwischen den Messzeiten (21) liegen und in welchen keine Bestrahlung der Speicherleuchtstoffplatte mit Stimulationslicht (3, 13) erfolgt, mehrere Offsetsignale (O) erzeugt, aus welchen mindestens ein Offsetwert abgeleitet wird, welcher ein Maß für einen Untergrund darstellt, welcher insbesondere von Umgebungslicht und/oder Dunkelströmen des Detektors (7, 17) verursacht wird und zur Korrektur der Emissionslichtsignale (S, D) herangezogen wird.

11. Verfahren nach Anspruch 10, wobei die zwischen den Messzeiten (21) liegenden einzelnen Referenz- und Offsetzeiten (22 bzw. 23) abwechselnd aufeinander folgen und durch jeweils mindestens eine Messzeit (21) voneinander getrennt sind.

12. Verfahren nach Anspruch 11, wobei die Summe aus einer Messzeit (21) und einer darauf folgenden Referenz- bzw. Offsetzeit (22 bzw. 23) eine Zykluszeitdauer ergibt und die Messzeit (21) zwischen 60 und 80% der Zykluszeitdauer und die Referenz- bzw. Offsetzeit (22 bzw. 23) dementsprechend zwischen 40 und 20% der Zykluszeitdauer beträgt.

13. Vorrichtung zum Auslesen von in einer Speicherleuchtstoffplatte (1) gespeicherten Röntgeninformationen mit einer Stimulationslichtquelle (2-5, 12) zum Bestrahlen der Speicherleuchtstoffplatte (1) mit Stimulationslicht (3, 13), welches die Speicherleuchtstoffplatte (1) zur Aussendung von Emissionslicht anregen kann, und einem Detektor (7, 17) zum Erfassen des Emissionslichts während mehrerer Messzeiten (21) und zur Umwandlung des erfassten Emissionslichts in entsprechende Emissionslichtsignale (S, D), **gekennzeichnet durch** eine Steuerungseinrichtung (10) zur Steuerung der Vorrichtung in der Weise, dass der Detektor (7, 17) während mehrerer Referenzmesszeiten (22) Referenzmessungen durchführt, indem mit dem Detektor (7, 17) während der Referenzmesszeiten (22) das von einer Referenzlichtquelle (19, 19') ausgesandte Referenzlicht erfasst und in mehrere Referenzsignale (R) umgewandelt wird, wobei die einzelnen Referenzmesszeiten (22) jeweils zwischen den Messzeiten (21) liegen und die Referenzsignale (R) zur Überprüfung der Empfindlichkeit des Detektors (7, 17) für Emissionslicht herangezogen werden.

## Claims

1. A method for reading out X-ray information stored in a storage phosphor plate (1), the storage phosphor plate (1) being irradiated with stimulation light (3, 13) and thus being stimulated to emit emission light which is collected by a detector (7, 17) during a number of measuring times (21) and is converted into corresponding emission light signals (S, D), **characterised in that** reference measurements are taken by the detector (7, 17) during a number of reference measuring times (22), the reference light emitted by a reference light source (19, 19') being collected by the detector (7, 17) during the reference measuring times (22) and being converted into a number of reference signals (R), the individual reference measuring times (22) respectively coming between the measuring times (21), and the reference signals (R) being used to check the sensitivity of the detector (7, 17) to emission light.

2. The method according to Claim 1, from the reference signals (R) at least one reference value (R') being derived which is used for checking the sensitivity of the detector (7, 17) to emission light.

3. The method according to Claim 2, the reference value (R') being derived from the reference signals (R) by averaging the reference signals (R).

4. The method according to any of the preceding claims, the reference signals (R) and the reference value (R') derived from the reference signals (R) being compared with a desired reference value (R") in order to check the sensitivity of the detector (7, 17).

5. The method according to Claim 4, the sensitivity of the detector (7, 17) being changed if the reference signals (R) or the reference value (R') derived from the reference signals (R) deviate(s) from the desired reference value (R").

6. The method according to Claim 4, the emission light signals (S, D) being corrected if the reference signals (R) or the reference value (R') derived from the reference signals (R) deviate(s) from the desired reference value (R").

7. The method according to any of the preceding claims, the reference light source (19, 19') emitting the reference light during the reference measuring times (22) and not emitting any reference light during the measuring times (21).

8. The method according to any of the preceding claims, the reference light emitted by the reference light source (19, 19') having an intensity which is different at different reference measuring times (22).

9. The method according to any of Claims 1 to 8, the detector (7, 17) being a photomultiplier (7) on which there is a high voltage by means of which the sensitivity of the detector (7) is set.

10. The method according to any of the preceding claims, during a number of offset measuring times (23), which respectively come between the measuring times (21) and during which there is no irradiation of the storage phosphor plate with stimulation light (3, 13), the detector (7, 17) producing a number of offset signals (O) from which at least one offset value is derived which constitutes a criterion for a background which is caused in particular by ambient light and/or dark currents of the detector (7, 17) and is used to correct the emission light signals (S, D).

11. The method according to Claim 10, the individual reference and offset times (22 and 23) coming between the measuring times (21) following one another alternately and being separated from one another by at least one respective measuring time (21).

12. The method according to Claim 11, the sum of a measuring time (21) and a subsequent reference or offset time (22 or 23) producing a cycle duration, and the measuring time (21) being between 60 and 80% of the cycle duration, and the reference or offset time (22 or 23) correspondingly being between 40 and 20% of the cycle duration.

13. An apparatus for reading out X-ray information stored in a storage phosphor plate (1) having a stimulation light source (2-5, 12) for irradiating the storage phosphor plate (1) with stimulation light (3, 13) which can stimulate the storage phosphor plate (1) to emit emission light and a detector (7, 17) for collecting the emission light during a number of measuring times (21) and for converting the emission light collected into corresponding emission light signals (S, D), **characterised by** a control device (10) for controlling the apparatus in such a way that the detector (7, 17) takes reference measurements during a number of reference measuring times (22), during the reference measuring times (22) the reference light emitted by a reference light source (19, 19') being collected by the detector (7, 17) and being converted into a number of reference signals (R), the individual reference measuring times (22) respectively coming between the measuring times (21), and the reference signals (R) being used to check the sensitivity of the detector (7, 17) to emission light.

## Revendications

1. Procédé de lecture d'informations radiographiques enregistrées dans une plaque à mémoire au phosphore (1), dans lequel la plaque à mémoire au phosphore (1) est exposée à de la lumière de stimulation (3, 13) et est ainsi stimulée à émettre de la lumière d'émission qui est captée par un détecteur (7, 17) pendant plusieurs périodes de mesure (21) et est convertie en des signaux de lumière d'émission (S, D) correspondants, **caractérisé en ce que** des mesures de références sont conduites à l'aide du détecteur (7, 17) pendant plusieurs périodes de mesure de référence (22), ledit détecteur (7, 17) captant, lors des périodes de mesure de référence (22), la lumière de référence émise par une source lumineuse de référence (19, 19') et la convertissant en plusieurs signaux de référence (R), les périodes de mesure de référence (22) respectives se situant chacune entre les périodes de mesure (21), et les signaux de référence (R) étant exploités pour vérifier la sensibilité du détecteur (7, 17) à la lumière d'émission.

2. Procédé selon la revendication 1, dans lequel on dérive à partir des signaux de référence (R) au moins une valeur de référence (R') qui est exploitée pour vérifier la sensibilité du détecteur (7, 17) à la lumière d'émission.

3. Procédé selon la revendication 2, dans lequel la valeur de référence (R') est dérivée des signaux de référence (R) par moyennation des signaux de référence (R).

4. Procédé selon l'une des revendications précédentes, dans lequel la vérification de la sensibilité du détecteur (7, 17) s'effectue en comparant les signaux de référence (R), ou la valeur de référence (R') dérivée des signaux de référence (R), à une valeur de consigne de référence (R").

5. Procédé selon la revendication 4, dans lequel la sensibilité du détecteur (7, 17) est modifiée lorsque les signaux de référence (R) ou la valeur de référence (R') dérivée des signaux de référence (R) s'écarte(nt) de la valeur de consigne de référence (R").

6. Procédé selon la revendication 4, dans lequel les signaux de lumière d'émission (S, D) sont corrigés lorsque les signaux de référence (R) ou la valeur de référence (R') dérivée des signaux de référence (R) s'écarte(nt) de la valeur de consigne de référence (R").

7. Procédé selon l'une des revendications précédentes, dans lequel la source lumineuse de référence (19, 19') est émettrice de lumière de référence pendant les périodes de mesure de référence (22) et n'est pas émettrice de lumière de référence pendant les périodes de mesure (21).

8. Procédé selon l'une des revendications précédentes, dans lequel la lumière de référence émise par la source lumineuse de référence (19, 19') présente une intensité différente pendant des périodes de mesure de référence (22) différentes.

9. Procédé selon l'une des revendications 1 à 8, dans lequel le détecteur (7, 17) est un photomultiplicateur (7) aux bornes duquel est appliquée une haute tension qui permet de régler la sensibilité du détecteur (7).

10. Procédé selon l'une des revendications précédentes, dans lequel le détecteur (7, 17) produit plusieurs signaux de décalage (O) pendant plusieurs périodes de mesure de décalage (23) respectivement situées entre les périodes de mesure (21) et durant lesquelles la plaque à mémoire au phosphore n'est pas exposée à la lumière de stimulation (3, 13), et on dérive de ces signaux de décalage au moins une valeur de décalage représentative d'un fond causé notamment par la lumière ambiante et/ou par des courants d'obscurité du détecteur (7, 17) et servant à corriger les signaux de lumière d'émission (S, D).

11. Procédé selon la revendication 10, dans lequel les diverses périodes de référence et de décalage (respectivement 22 et 23) situées entre les périodes de mesure (21) se suivent alternativement et sont séparées par au moins une période de mesure (21) respective.

12. Procédé selon la revendication 11, dans lequel la somme constituée par une période de mesure (21) et une période de référence ou de décalage subséquente (22 ou 23) produit une durée de temps de cycle, la période de mesure (21) représentant entre 60 et 80 % de la durée du temps de cycle et la période de référence ou de décalage subséquente (22 ou 23) représentant en conséquence entre 40 et 20 % de la durée du temps de cycle.

13. Dispositif de lecture d'informations radiographiques enregistrées dans une plaque à mémoire au phosphore (1) comportant une source de lumière de stimulation (2-5, 12) permettant d'exposer la plaque à mémoire au phosphore (1) à de la lumière de stimulation (3, 13) pouvant stimuler la plaque à mémoire au phosphore (1) à émettre de la lumière d'émission, et un détecteur (7, 17) capable de capter la lumière d'émission pendant plusieurs périodes de mesure (21) et de convertir la lumière d'émission captée en des signaux de lumière d'émission (S, D) correspondants, **caractérisé par** un dispositif de commande (10) permettant de commander le dispositif de lecture de sorte que le détecteur (7, 17) réalise des mesures de référence pendant plusieurs périodes de mesure de référence (22), ledit détecteur (7, 17) captant, lors des périodes de mesure de référence (22), la lumière de référence émise par une source lumineuse de référence (19, 19') et la convertissant en plusieurs signaux de référence (R), les périodes de mesure de référence (22) respectives se situant chacune entre les périodes de mesure (21), et les signaux de référence (R) étant exploités pour vérifier la sensibilité du détecteur (7, 17) à la lumière d'émission.
